# DEMANDE DE BREVET EUROPEEN

(11) **EP 3 579 491 A1**
(43) Date de publication de la demande: **11.12.2019**
(21) Numéro de dépôt: 19175403.5
(22) Date de dépôt: 20.05.2019
(51) Int. Cl.: H04L 9/00

(54) **PROCÉDÉ DE DÉTERMINATION D'INVERSE MODULAIRE ET DISPOSITIF DE TRAITEMENT CRYPTOGRAPHIQUE ASSOCIÉ**

(30) Priorité: 08.06.2018 FR 1855043
(71) Demandeur: IDEMIA France, 92400 Courbevoie (FR)
(72) Inventeur: CHABRIER, Thomas, 92400 Courbevoie (FR); PIRET, Gilles, 92400 Courbevoie (FR)
(74) Mandataire: Jacobacci Coralis Harle

(57) **Abrégé**

Dans un procédé de détermination de l'inverse modulaire d'un nombre, des itérations successives sont appliquées à deux paires comprenant chacune une première variable (U₀ ; U₁) et une seconde variable de manière à ce qu'à la fin de chaque itération et pour chaque paire, le produit de la seconde variable et dudit nombre soit égal à la première variable modulo un module donné.

Chaque itération inclut au moins une division par deux de la première variable (U₀ ; U₁) d'une première paire ou d'une seconde paire, ou une combinaison (E46 ; E50) de la première variable (U₀) de la première paire et de la première variable (U₁) de la seconde paire par addition ou soustraction.

Certaines au moins des itérations incluant une combinaison par addition ou soustraction comprennent une étape de mémorisation (E46 ; E50) du résultat de ladite combinaison dans la première variable (Uᵣ) d'une paire déterminée de manière aléatoire parmi la première paire et la seconde paire.

Un dispositif de traitement cryptographique associé est également décrit.

## Description

### DOMAINE TECHNIQUE AUQUEL SE RAPPORTE L'INVENTION

La présente invention concerne de manière générale le domaine du traitement cryptographique utilisant l'arithmétique modulaire.

Elle concerne plus particulièrement un procédé de détermination d'inverse modulaire et un dispositif de traitement cryptographique associé.

### ARRIERE-PLAN TECHNOLOGIQUE

Il a déjà été proposé, par exemple dans l'article "New Algorithm for Classical Modular Inverse", de Robert Lórencz in Cryptographic Hardware and Embedded Systems - CHES 2002, 4th International Workshop, pp. 57-70, volume 2523 of LNCS, Springer, un procédé de détermination de l'inverse modulaire d'un nombre, dans lequel des itérations successives sont appliquées à deux paires comprenant chacune une première variable et une seconde variable de manière à ce qu'à la fin de chaque itération et pour chaque paire, le produit de la seconde variable et dudit nombre soit égal à la première variable modulo un module donné (les deux paires comprenant une première paire et une seconde paire).

On prévoit dans un tel processus que chaque itération inclue soit une division par deux de la première variable de la première paire ou de la seconde paire, soit une combinaison de la première variable de la première paire et de la première variable de la seconde paire par addition ou soustraction.

Les valeurs respectives des premières variables diminuent ainsi jusqu'à ce que l'une d'elles soit égale 1 auquel cas, du fait de la relation énoncée ci-dessus entre la première variable et la seconde variable de chaque paire, la seconde valeur associée est égale à l'inverse modulaire recherché.

Une mise en oeuvre d'un tel procédé (par exemple dans le cadre d'un algorithme cryptographique) sans précaution particulière n'est toutefois pas protégée contre des attaques par canal auxiliaire. En effet, l'observation d'un processeur mettant en oeuvre le procédé peut permettre de détecter des informations sur les données successivement manipulées et, après observation répétée d'un grand nombre de mises en oeuvre du procédé, d'en déduire le nombre traité.

### OBJET DE L'INVENTION

Dans ce contexte, la présente invention propose un procédé de détermination de l'inverse modulaire d'un nombre, dans lequel des itérations successives sont appliquées à deux paires comprenant chacune une première variable et une seconde variable de manière à ce qu'à la fin de chaque itération et pour chaque paire, le produit de la seconde variable et dudit nombre soit égal à la première variable modulo un module donné, les deux paires comprenant une première paire et une seconde paire, chaque itération incluant au moins une division par deux de la première variable de la première paire ou de la seconde paire, ou une combinaison de la première variable de la première paire et de la première variable de la seconde paire par addition ou soustraction, caractérisé en ce que certaines au moins des itérations incluant une combinaison par addition ou soustraction comprennent une étape de mémorisation du résultat de ladite combinaison dans la première variable d'une paire déterminée de manière aléatoire parmi la première paire et la seconde paire.

La variable mémorisant le résultat de la combinaison précitée peut ainsi différer d'une mise en oeuvre du procédé à l'autre (c'est-à-dire d'une mise en oeuvre de l'algorithme cryptographique utilisant ce procédé à l'autre) de sorte que le traitement ultérieur sera distinct selon la mise en oeuvre concernée.

Cette variabilité du fonctionnement est en outre introduite pour plusieurs des itérations incluant une telle combinaison de sorte que le traitement effectué sera nettement modifié d'une mise en oeuvre à l'autre et ne pourra donc pas être utilisé par un attaquant pour déduire des informations sur les données manipulées.

D'autres caractéristiques non limitatives et avantageuses du procédé conforme à l'invention, prises individuellement ou selon toutes les combinaisons techniquement possibles, sont les suivantes :
- lorsque le nombre d'itérations effectuées est supérieur à un seuil, chaque itération incluant une combinaison par addition ou soustraction comprend une étape de mémorisation du résultat de ladite combinaison dans la variable de plus grande valeur absolue parmi la première variable de la première paire et la première variable de la seconde paire ;
- le procédé comprend une étape préalable de détermination du seuil par tirage aléatoire ;
- pour au moins une itération comprenant une combinaison par addition ou soustraction, la combinaison est réalisée par addition si la première variable de la première paire et la première variable de la seconde paire sont de signes opposés, et par soustraction si la première variable de la première paire et la première variable de la seconde paire sont de même signe ;
- chaque itération comprenant une division par deux de la première variable d'une paire donnée comprend, si la seconde variable de ladite paire donnée est paire, une étape de division par deux de la seconde variable de ladite paire donnée, et, si la seconde variable de ladite paire donnée est impaire, une étape de somme de la seconde variable de ladite paire donnée et du module, et une étape de division par deux de ladite somme.
- le procédé comprend une étape de mémorisation d'une valeur aléatoire dans une variable supplémentaire, et, dans au moins une itération, on procède, si la variable supplémentaire est paire, à la division par deux de la variable supplémentaire, et, si la variable supplémentaire est impaire, à la somme de la variable supplémentaire et du module et à la division par deux de cette somme ;
- chaque itération incluant une combinaison par addition ou soustraction comprend une combinaison similaire de la seconde variable de la première paire et de la seconde variable de la seconde paire.

L'invention propose également un dispositif de traitement cryptographique, comprenant une unité de détermination de l'inverse modulaire d'un nombre conçue pour appliquer des itérations successives à deux paires comprenant chacune une première variable et une seconde variable de manière à ce qu'à la fin de chaque itération et pour chaque paire, le produit de la seconde variable et dudit nombre soit égal à la première variable modulo un module donné, les deux paires comprenant une première paire et une seconde paire, dans lequel ladite unité est conçue pour activer, à chaque itération, au moins un bloc de division par deux de la première variable de la première paire ou de la seconde paire, ou un bloc de combinaison de la première variable de la première paire et de la première variable de la seconde paire par addition ou soustraction, caractérisé en ce que ladite unité est conçue, pour certaines au moins des itérations, pour mémoriser le résultat produit par le bloc de combinaison dans la première variable d'une paire déterminée de manière aléatoire parmi la première paire et la seconde paire.

L'unité de détermination de l'inverse modulaire peut en outre être conçue pour, lorsque le nombre d'itérations effectuées est supérieur à un seuil, mémoriser le résultat produit par le bloc de combinaison dans la variable de plus grande valeur absolue parmi la première variable de la première paire et la première variable de la seconde paire.

Le bloc de combinaison de la première variable de la première paire et de la première variable de la seconde paire par addition ou soustraction peut en pratique être conçu pour réaliser la combinaison par addition si la première variable de la première paire et la première variable de la seconde paire sont de signes opposés, et par soustraction si la première variable de la première paire et la première variable de la seconde paire sont de même signe.

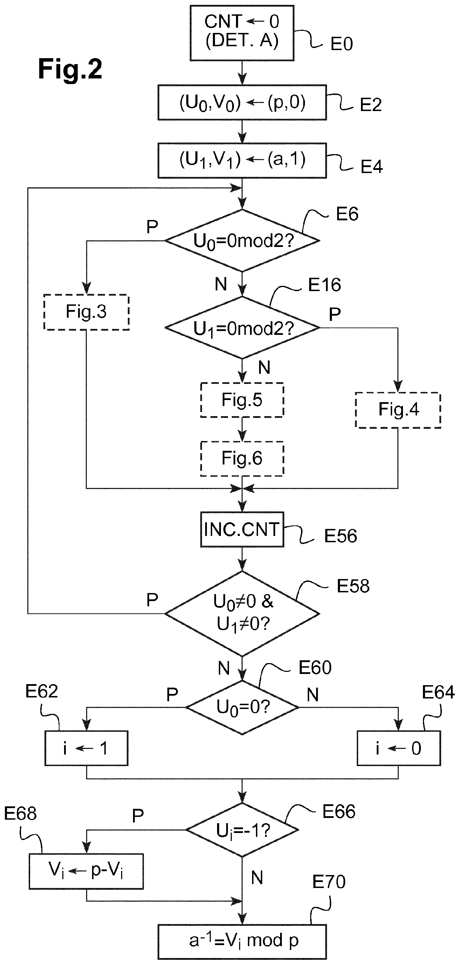

L'unité de détermination de l'inverse modulaire est par exemple mise en oeuvre en pratique au moyen d'un processeur et d'instructions de programme d'ordinateur mémorisées dans une mémoire (associée au processeur) et exécutables par le processeur pour mettre en oeuvre par exemple un procédé tel que celui décrit plus loin en référence à la figure 2.

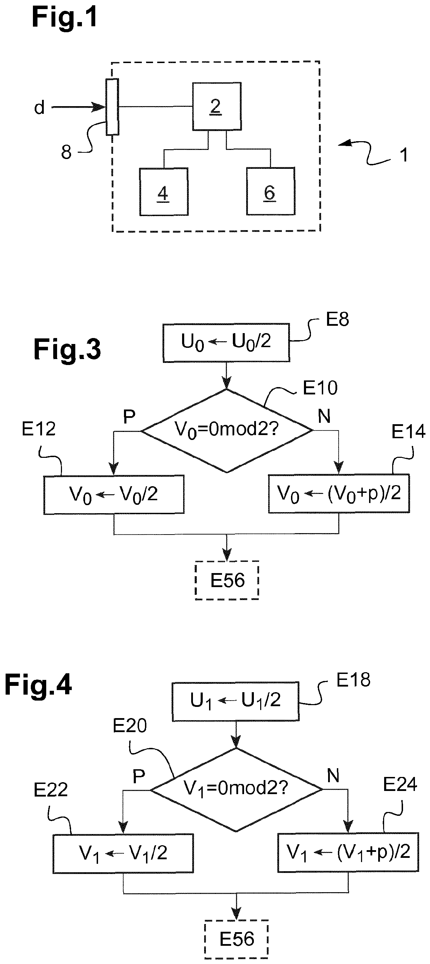

Le bloc de division par deux de la première variable de la première paire ou de la seconde paire peut dans ce cas lui aussi être mis en oeuvre au moyen du processeur et d'instructions de programme d'ordinateur mémorisées dans la mémoire et exécutables par le processeur pour mettre en oeuvre par exemple des étapes telles que celles des figures 3 et 4 décrites plus loin.

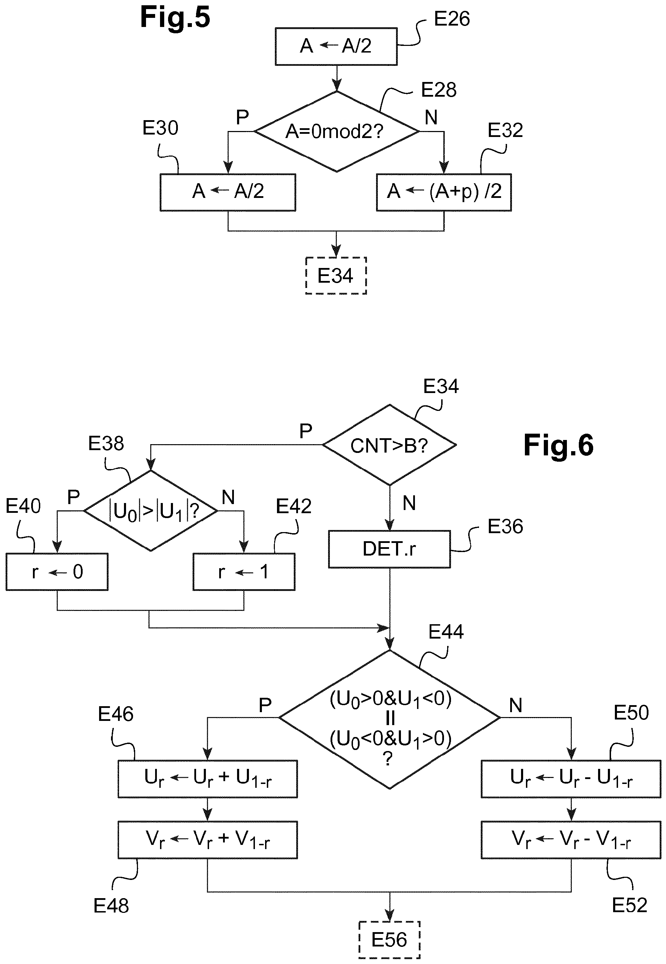

De même, le bloc de combinaison de la première variable de la première paire et de la première variable de la seconde paire par addition ou soustraction peut alors être mis en oeuvre au moyen du processeur et d'instructions de programme d'ordinateur mémorisées dans la mémoire et exécutables par le processeur pour mettre en oeuvre par exemple des étapes telles que celles de la figure 6 décrite plus loin.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments principaux d'une entité électronique au sein de laquelle est mise en oeuvre l'invention ;
- la figure 2 représente un exemple de procédé de détermination d'inverse conforme à l'invention ;
- la figure 3 représente une partie du procédé de la figure 2 incluant une étape de division par deux ;
- la figure 4 représente une partie du procédé de la figure 2 incluant une autre étape de division par deux ;
- la figure 5 représente une partie optionnelle du procédé de la figure 2 ; et
- la figure 6 représente une partie du procédé de la figure 2 incluant une étape de combinaison de variables.

La figure 1 représente schématiquement les éléments principaux d'une entité électronique 1 au sein de laquelle est mise en oeuvre l'invention. Cette entité électronique est par exemple une carte à microcircuit, telle qu'une carte à circuit intégré universelle (ou UICC pour "*Universal Integrated Circuit Card*")*.* En variante, il pourrait s'agir d'un élément sécurisé (ou SE pour "*Secure Element*") - par exemple un microcontrôleur sécurisé ; un tel élément sécurisé est par exemple intégré à un dispositif électronique portatif (ou "*hand-held electronic device*" selon l'appellation anglo-saxonne), tel qu'un terminal de communication ou un passeport électronique. Selon une autre variante encore, l'entité électronique 1 pourrait être un ordinateur ou un module matériel de sécurité (ou HSM pour "*Hardware Security Module*").

L'entité électronique 1 comprend un processeur 2 (ici un microprocesseur), une mémoire vive 4 et une mémoire non-volatile réinscriptible 6 (par exemple de type EEPROM pour "*Electrically Erasable and Programmable Read-Only Memory*")*.* L'entité électronique 1 pourrait éventuellement comprendre en outre une mémoire morte. La mémoire vive 4 et la mémoire non-volatile réinscriptible 6 (ainsi que le cas échéant la mémoire morte) sont chacune liées au processeur 2 de sorte que le processeur 2 peut lire ou écrire des données dans chacune de ces mémoires.

Une de ces mémoires, par exemple la mémoire non-volatile réinscriptible 6, mémorise des instructions de programme d'ordinateur, dont certaines permettent la mise en oeuvre du procédé décrit ci-dessous en référence à la figure 2 lorsque ces instructions sont exécutées par le processeur 2.

Les mémoires 4, 6 stockent également des données représentatives de valeurs utilisées lors de la mise en oeuvre de ce procédé.

L'entité électronique 1 est conçue (ici grâce à certaines des instructions mémorisées dans une mémoire 4, 6 de l'entité électronique 1 et exécutables par le processeur 2 de l'entité électronique) pour mettre en oeuvre un algorithme cryptographique comprenant une inversion modulaire. L'entité électronique 1 est donc un dispositif de traitement cryptographique.

L'entité électronique 1 comprend en outre une interface de communication 8 avec des dispositifs électroniques externes. Dans le cas décrit ici où l'entité électronique 1 est une carte à microcircuit, l'interface de communication 8 comprend par exemple des contacts affleurant sur une face de la carte à microcircuit. En variante, l'interface de communication 8 pourrait être réalisée par un module de communication sans contact. De manière générale, l'interface de communication 8 peut être un module de communication (filaire ou sans fil) avec une autre entité électronique.

Dans certains modes de réalisation, le processeur 2 peut ainsi recevoir des données d de l'autre entité électronique via l'interface de communication 8 et/ou émettre d'autres données, par exemple un résultat d'application de l'algorithme cryptographique précité, à destination de l'autre entité électronique via l'interface de communication 8.

Dans d'autres modes de réalisation, le résultat d'application de l'algorithme cryptographique précité est mémorisé dans une mémoire, par exemple la mémoire non-volatile réinscriptible 6, de l'entité électronique 1.

Selon un premier exemple de réalisation envisageable, l'algorithme cryptographique est un algorithme de génération de clés, par exemple dans le cadre d'un schéma de chiffrement asymétrique (tel que RSA). Dans ce contexte, l'opération d'inversion modulaire est appliquée à l'exposant public qui fait partie de la clé publique (exposant public utilisable ensuite en tant qu'exposant pour chiffrer un message ou vérifier la signature d'un message) afin d'obtenir la clé privée associée (utilisable ensuite en tant qu'exposant pour déchiffrer un message ou signer un message), ou une composante de la clé privée associée.

Selon un second exemple de réalisation envisageable, l'algorithme cryptographique est un algorithme cryptographique (par exemple de signature ou de vérification de signature) sur une courbe elliptique, tel que l'algorithme ECDSA (pour "*Elliptic Curve Digital Signature Algorithm*")*.* Dans de tels algorithmes cryptographiques, l'opération d'inversion modulaire est appliquée à un nombre scalaire ; l'inverse modulaire ainsi déterminé peut alors être appliqué à un point de la courbe elliptique par produit scalaire.

Selon un troisième exemple de réalisation envisageable, l'algorithme cryptographique utilise un mécanisme de masquage multiplicatif (c'est-à-dire une multiplication d'une valeur à traiter par un masque aléatoire) afin de protéger l'algorithme contre les attaques par canal auxiliaire. L'inverse modulaire déterminé par l'opération d'inversion modulaire peut alors être multiplié par une valeur masquée dans le cadre d'une opération de démasquage de cette valeur.

La figure 2 représente, sous forme de logigramme, un exemple de procédé de détermination d'inverse modulaire conforme à l'invention.

Comme expliqué ci-après, ce procédé permet de déterminer l'inverse modulaire d'un nombre a dans une arithmétique modulaire de module p, c'est-à-dire de déterminer la valeur de : a⁻¹ mod p. (On prévoit en général que le module p est strictement supérieur à 2 et que le module p et le nombre a sont premiers entre eux. En pratique, dans certains modes de réalisation, le module p est un nombre premier et/ou le nombre a est strictement inférieur au module p.)

Comme déjà indiqué, le nombre a peut être l'exposant public d'une clé publique d'un schéma de chiffrement asymétrique (par exemple de type RSA) et le procédé de détermination de l'inverse modulaire est alors mis en oeuvre dans le cadre de la détermination de la clé privée associée à la clé publique (algorithme cryptographique de génération de clés).

Dans ce même contexte (algorithme cryptographique de génération de clés dans un schéma de chiffrement asymétrique tel que RSA), le procédé de détermination de l'inverse modulaire peut être mis en oeuvre pour le calcul d'un paramètre de clé iₐ= a⁻¹ mod p, où a est un facteur secret du module RSA (ces facteurs secrets étant généralement notés p et q).

En variante, le nombre a peut être un scalaire dans le cadre d'un algorithme cryptographique sur une courbe elliptique, l'inverse modulaire obtenu pouvant alors être appliqué à un point de la courbe elliptique au moyen d'un produit scalaire (directement ou après multiplication par au moins un autre scalaire).

Selon une autre variante, également dans le cadre d'un algorithme cryptographique sur une courbe elliptique, le procédé de détermination de l'inverse modulaire est appliqué à la troisième coordonnée (généralement notée z) d'un point de la courbe en coordonnées projectives lors d'une conversion en coordonnées affines.

Selon une autre variante encore, le nombre a peut être un masque multiplicatif ; l'inverse modulaire obtenu peut alors être appliqué par multiplication à une donnée masquée manipulée dans le cadre de l'algorithme cryptographique concerné.

Dans un autre cas d'utilisation, le procédé de détermination de l'inverse modulaire est mis en oeuvre dans le cadre d'une méthode de protection de l'algorithme RSA-CRT contre les attaques par faute, telle que décrite dans l'article "Fault Attacks and Countermeasures on Vigilant's RSA-CRT Algorithm", de Jean-Sébastien Coron, Christophe Giraud, Nicolas Morin, Gilles Piret, David Vigilant, in FDTC 2010 (2010 Workshop on Fault Diagnosis and Tolerance in Cryptography, FDTC 2010, Santa Barbara, California, USA, 21 August 2010), IEEE Computer Society 2010, pp. 89-96. Le nombre a est dans ce cas un facteur secret du module N de l'algorithme RSA et le module p est le masque r² qui est appliqué audit facteur secret.

Le procédé de la figure 2 débute à l'étape E0 par l'initialisation (ici la mise à zéro) d'un compteur CNT. Le compteur CNT est par exemple mémorisé dans la mémoire vive 4 et initialisé à l'étape E0 par le processeur 2.

On peut également prévoir à titre optionnel lors de cette étape E0 de déterminer par tirage aléatoire une variable A (utilisée dans les étapes optionnelles représentées en Figure 5, comme décrit plus loin).

Le processeur 2 initialise alors à l'étape E2 une première paire (U₀, V₀) de variables avec les valeurs (p, 0). Autrement dit, la première variable U₀ de la première paire est initialisée avec la valeur du module p et la seconde variable V₀ de la première paire est initialisée avec la valeur 0 (valeur de l'élément neutre pour l'addition).

Le processeur 2 initialise ensuite à l'étape E4 une seconde paire (U₁, V₁) de variables avec les valeurs (a, 1). Autrement dit, la première variable U₁ de la seconde paire est initialisée avec la valeur du nombre a (dont on souhaite déterminer l'inverse modulaire) et la seconde variable V₁ de la seconde paire est initialisée avec la valeur 1 (valeur de l'élément neutre pour la multiplication).

On remarque que, pour chaque paire (c'est-à-dire pour la première paire comme pour la seconde paire), le produit de la seconde variable V₀ ; V₁ et du nombre a est égal à la première variable U₀ ; U₁ modulo le module p. En effet :
V₀.a = O.a = 0 = p mod p = U₀ mod p,
V₁.a = 1.a = a = U₁ mod p.

Comme expliqué dans la suite, cette relation sera vraie (pour chacune des deux paires) tout au long du procédé, à la fin de chacune des itérations décrites ci-dessous.

Le procédé entre alors dans une boucle (à l'étape E6) afin de mettre en oeuvre une pluralité d'itérations tant qu'aucune des premières variables U₀, U₁ n'est nulle.

Chacune de ces itérations commence ainsi à l'étape E6 à laquelle le processeur 2 détermine si la première variable U₀ de la première paire a une valeur paire (c'est-à-dire si U₀ = 0 mod 2).

Dans la négative (flèche N), le procédé se poursuit à l'étape E16 décrite plus loin.

Dans le cas positif (flèche P), le processeur 2 procède à l'étape E8 (représentée en figure 3) à la division par 2 du contenu de la première variable U₀ de la première paire (par exemple en décalant d'un bit vers la droite la représentation binaire de la première variable U₀), puis met en oeuvre l'étape E10.

Lors de cette étape E10, le processeur 2 détermine si la seconde variable V₀ de la première paire a une valeur paire (c'est-à-dire si V₀ = 0 mod 2).

Dans le cas positif (flèche P), le processeur 2 procède à l'étape E12 à la division par 2 du contenu de la seconde variable V₀ de la première paire (par exemple en décalant d'un bit vers la droite la représentation binaire de cette seconde variable V₀).

Dans le cas négatif (flèche N), le processeur 2 ajoute tout d'abord le module p au contenu de la seconde variable V₀ de la première paire, puis procède à la division par 2 du contenu (ainsi modifié) de la seconde variable V₀ de la première paire, par exemple en décalant d'un bit vers la droite la représentation binaire de cette seconde variable V₀ (étape E14).

On rappelle en effet que le module p est impair (s'agissant d'un nombre premier strictement supérieur à 2) et que, si la seconde variable V₀ est impaire d'après le test de l'étape E10, la somme V₀+p est alors paire et donc divisible par 2.

On remarque par ailleurs que les traitements effectués aux étapes E8 à E14 permettent de conserver la relation : V₀.a = U₀ mod p.

Quel que soit le résultat du test de l'étape E10, le procédé se poursuit à l'étape E56 décrite plus loin.

On décrit à présent l'étape E16 (à laquelle le procédé aboutit lorsque le contenu de la première variable U₀ de la première paire est impair, voir ci-dessus l'étape E6).

Le processeur 2 détermine à l'étape E16 si la première variable U₁ de la seconde paire a une valeur paire (c'est-à-dire si U₁ = 0 mod 2).

Dans la négative (flèche N), le procédé se poursuit à l'étape E26 décrite plus loin en référence à la figure 5.

Dans le cas positif (flèche P), le processeur 2 procède à l'étape E18 (représentée en figure 4) à la division par 2 du contenu de la première variable U₁ de la seconde paire (par exemple en décalant d'un bit vers la droite la représentation binaire de la première variable U₁), puis met en oeuvre l'étape E20.

Lors de cette étape E20, le processeur 2 détermine si la seconde variable V₁ de la seconde paire a une valeur paire (c'est-à-dire si V₁ = 0 mod 2).

Dans le cas positif (flèche P), le processeur 2 procède à l'étape E22 à la division par 2 du contenu de la seconde variable V₁ de la seconde paire (par exemple en décalant d'un bit vers la droite la représentation binaire de cette seconde variable V₁).

Dans le cas négatif (flèche N), le processeur 2 ajoute tout d'abord le module p au contenu de la seconde variable V₁ de la seconde paire, puis procède à la division par 2 du contenu (ainsi modifié) de la seconde variable V₁ de la seconde paire, par exemple en décalant d'un bit vers la droite la représentation binaire de cette seconde variable V₁ (étape E24).

On remarque que les étapes E18 à E24 mettent en oeuvre au sein de la seconde paire (U₁, V₁) un traitement identique à celui mis en oeuvre au sein de la première paire (U₀, V₀) au moyen des étapes E8 à E14.

Comme indiqué pour la première paire (U₀, V₀) ci-dessus, ces traitements permettent de conserver la relation : V₁.a = U₁ mod p.

Quel que soit le résultat du test de l'étape E20, le procédé se poursuit à l'étape E56 décrite plus loin.

On décrit à présent l'étape E26 (représentée en figure 5) à laquelle le procédé aboutit lorsque le contenu de la première variable U₁ de la seconde paire est impair (après le test de l'étape E16).

La mise en oeuvre des étapes E26 à E32 (représentées en figure 5) est optionnelle et le procédé pourrait donc en variante se poursuivre directement à l'étape E34 représentée en figure 6 (en cas de détermination négative à l'étape E16).

Le processeur 2 procède à l'étape E26 à la division par 2 du contenu de la variable A (par exemple en décalant d'un bit vers la droite la représentation binaire de la variable A), puis met en oeuvre l'étape E28.

Lors de cette étape E28, le processeur 2 détermine si la variable A a une valeur paire (c'est-à-dire si A = 0 mod 2).

Dans le cas positif (flèche P), le processeur 2 procède à l'étape E30 à la division par 2 du contenu de la variable A (par exemple en décalant d'un bit vers la droite la représentation binaire de cette variable A).

Dans le cas négatif (flèche N), le processeur 2 ajoute tout d'abord le module p au contenu de la variable A, puis procède à la division par 2 du contenu (ainsi modifié) de la variable A, par exemple en décalant d'un bit vers la droite la représentation binaire de cette variable A (étape E32).

Les étapes E26 à E32 sont des étapes leurres destinées à simuler, lorsque les deux premières variables U₀, U₁ sont impaires (résultats négatifs aux tests des étapes E6 et E16), le fonctionnement mis en oeuvre soit aux étapes E8 à E14, soit aux étapes E18 à E24. Au cours des étapes E26 à E32, on applique en effet à la variable A (variable leurre) des opérations du même type que celles utilisées soit dans les étapes E8 à E14, soit dans les étapes E18 à E24.

Le contenu de la variable A n'est en revanche nullement utilisé pour la détermination de l'inverse modulaire et peut donc être modifié à souhait, sans conséquence sur l'inverse modulaire déterminé. On peut ainsi d'ailleurs effectuer une division par 2 de la variable A (en pratique un décalage d'un bit vers la droite de la variable A) à l'étape E26 (pour simuler l'étape E8 ou l'étape E18) sans vérifier au préalable si le contenu de la variable A est pair.

Quel que soit le résultat du test de l'étape E28 (ou en cas de détermination négative au test de l'étape E16 dans la variante où les étapes de la figure 5 ne sont pas utilisées), le procédé se poursuit à l'étape E34 (voir figure 6).

Le processeur 2 détermine à l'étape E34 si la valeur courante du compteur CNT est supérieure à une borne B. En pratique, la borne B peut être prédéterminée (et dans ce cas par exemple mémorisée dans la mémoire non-volatile 6).

Selon une première variante envisageable, la borne B pourrait être déterminée (au début du procédé de la figure 2, par exemple à l'étape E0) en fonction du nombre de bits du module p.

Selon une seconde variante envisageable, la borne B pourrait être déterminée (au début du procédé de la figure 2, par exemple à l'étape E0) par tirage aléatoire, par exemple au sein d'une plage de valeurs prédéterminée.

Comme expliqué ci-après, la borne B permet de déterminer à partir de quelle itération la convergence du processus est accélérée (grâce aux étapes E38 à E42).

Tant que la valeur courante du compteur CNT est inférieure à la borne B (détermination négative à l'étape E34), le procédé continue à l'étape E36 à laquelle le processeur 2 détermine un indice binaire r par tirage aléatoire (parmi la valeur 0 et la valeur 1).

Le procédé se poursuit ensuite à l'étape E44 décrite plus loin.

Lorsque la valeur courante du compteur CNT est supérieure à la borne B (détermination positive à l'étape E34), le procédé se poursuit à l'étape E38 à laquelle le processeur 2 compare les valeurs absolues des premières variables U₀, U₁. (En effet, une première variable U₀ ; U₁ au moins pourrait être négative dans certaines situations suite à un précédent passage à l'étape E50.)

Si la valeur absolue de la première variable U₀ de la première paire est supérieure à la valeur absolue de la première variable U₁ de la seconde paire (c'est-à-dire |U₀|>|U₁|, test positif à l'étape E38), le processeur 2 met à 0 l'indice binaire r (étape E40).

Si la valeur absolue de la première variable U₀ de la première paire est inférieure ou égale à la valeur absolue de la première variable U₁ de la seconde paire (c'est-à-dire |U₀|≤|U₁|, test négatif à l'étape E38), le processeur 2 met à 1 l'indice binaire r (étape E42).

Du fait des étapes E46 et E50 décrites plus loin, c'est ainsi la première variable U₀ ; U₁ de plus grande valeur absolue qui sera modifiée à l'étape E46 ou E50 en vue précisément de diminuer sa valeur absolue, ce qui aide à la convergence du processus.

Quel que soit le résultat du test de l'étape E38, le procédé se poursuit à l'étape E44 décrite à présent.

Le processeur 2 détermine à l'étape E44 si les premières variables U₀, U₁ sont de signes opposés, c'est-à-dire si (U₀ > 0 & U₁ < 0) || (U₀ < 0 & U₁ > 0), où "&" désigne l'opérateur logique ET et "||" désigne l'opérateur logique OU.

Dans l'affirmative à l'étape E44 (flèche P), le processeur 2 procède à l'étape E46 à la combinaison par addition de la première variable U₀ de la première paire et de la première variable U₁ de la seconde paire, et à la mémorisation du résultat de cette combinaison dans la première variable Uᵣ de la paire désignée par l'indice binaire r, un indice binaire de valeur 0 désignant la première paire et un indice binaire de valeur 1 désignant la seconde paire.

Les premières variables U₀, U₁ étant ici de signes opposés, cette combinaison par addition permet une réduction de la valeur absolue de la première variable Uᵣ modifiée.

Le processeur 2 procède également dans ce cas à la combinaison par addition de la seconde variable V₀ de la première paire et de la seconde variable V₁ de la seconde paire, et à la mémorisation du résultat de cette combinaison dans la seconde variable Vᵣ de la paire désignée par l'indice binaire r (étape E48).

Grâce à la similarité du traitement réalisé respectivement sur les premières variables U₀, U₁ et sur les secondes variables V₀, V₁ au cours des étapes E46 et E48, la relation Vᵣ.a = Uᵣ mod p reste vraie pour la paire (désignée par l'indice binaire r) qui vient d'être modifiée (la relation V₁₋ᵣ.a = U₁₋ᵣ mod p restant vraie également pour l'autre paire du fait qu'elle n'est pas modifiée).

(On note ici que les additions précitées sont notées "Uᵣ + U₁₋ᵣ" et "Vᵣ + V₁₋ᵣ" en figure 6 par symétrie avec les soustractions des étapes E50 et E52 décrites plus loin, mais pourraient en variante être notées respectivement "U₀+ U₁" et "V₀ + V₁".)

Dans la négative à l'étape E44 (flèche N), le processeur 2 procède à l'étape E50 à la combinaison par soustraction de la première variable U₀ de la première paire et de la première variable U₁ de la seconde paire, et à la mémorisation du résultat de cette combinaison dans la première variable Uᵣ de la paire désignée par l'indice binaire r.

Les premières variables U₀, U₁ étant ici de même signe, cette combinaison par soustraction permet une réduction de la valeur absolue de la première variable Uᵣ modifiée.

Précisément, à l'étape E50, le processeur 2 soustrait, à la première variable Uᵣ de la paire désignée par l'indice binaire r, la première variable U₁₋ᵣ de l'autre paire : comme indiqué en figure 6, l'opération réalisée est : Uᵣ - U₁₋ᵣ.

Le processeur 2 procède également dans ce cas à la combinaison par soustraction de la seconde variable V₀ de la première paire et de la seconde variable V₁ de la seconde paire, et à la mémorisation du résultat de cette combinaison dans la seconde variable Vᵣ de la paire désignée par l'indice binaire r (étape E52).

Précisément, à l'étape E52, le processeur 2 soustrait, à la seconde variable Vᵣ de la paire désignée par l'indice binaire r, la seconde variable V₁₋ᵣ de l'autre paire : Vᵣ - V₁₋ᵣ.

Grâce à la similarité du traitement réalisé respectivement sur les premières variables U₀, U₁ et sur les secondes variables V₀, V₁ au cours des étapes E50 et E52, la relation Vᵣ.a = Uᵣ mod p reste vraie pour la paire (désignée par l'indice binaire r) qui vient d'être modifiée (la relation V₁₋ᵣ.a = U₁₋ᵣ mod p restant vraie également pour l'autre paire du fait qu'elle n'est pas modifiée).

On rappelle que, tant que la valeur courante du compteur CNT n'a pas atteint la borne B, l'indice binaire r (qui désigne la paire modifiée lors des étapes E46 et 48, ou E50 et E52) est déterminé de manière aléatoire (à l'étape E36 décrite plus haut).

Ainsi, la séquence des variables successivement modifiées au cours des différentes itérations est différente d'une mise en oeuvre à l'autre du procédé de la figure 2, de sorte qu'un attaquant ne pourra pas déduire les valeurs manipulées de l'observation répétée de la mise en oeuvre du procédé.

Quel que soit le résultat du test à l'étape E44, le procédé se poursuit à l'étape E56 (représentée en figure 2), à laquelle le processeur incrémente le compteur CNT.

Tant que ni la première variable U₀ de la première paire ni la première variable U₁ de la seconde paire ne vaut 0 (test de l'étape E58), le procédé boucle à l'étape E6 pour mise en oeuvre d'une nouvelle itération.

Ainsi, le procédé de la figure 2 comprend une pluralité d'itérations incluant chacune une division par deux de la première variable U₀ de la première paire (étape E8, figure 3), ou une division par deux de la première variable U₁ de la seconde paire (étape E18, figure 4), ou encore une combinaison de la première variable U₀ de la première paire et de la première variable U₁ de la seconde paire (figure 6) par addition (étape E46) ou par soustraction (étape E50).

En variante, chaque itération pourrait comprendre plusieurs opérations parmi : une division par deux de la première variable U₀ de la première paire, une division par deux de la première variable U₁ de la seconde paire, une combinaison de la première variable U₀ de la première paire et de la première variable U₁ de la seconde paire par addition ou par soustraction.

En particulier, on peut prévoir que chaque itération comprenne :
- tant que la première variable U₀ de la première paire a une valeur paire, une répétition des étapes de la figure 3, incluant à chaque fois une division par deux de la première variable U₀ de la première paire ;
- tant que la première variable U₁ de la seconde paire a une valeur paire, une répétition des étapes de la figure 4, incluant à chaque fois une division par deux de la première variable U₁ de la seconde paire ;
- les étapes de la figure 6, incluant une combinaison de la première variable U₀ de la première paire et de la première variable U₁ de la seconde paire par addition ou par soustraction.

Comme expliqué ci-dessus (quel que soit le mode de réalisation), à la fin de chaque itération, les relations suivantes sont maintenues :
V₀.a = U₀ mod p et V₁.a = U₁ mod p.

Lorsque la première variable U₀ de la première paire ou la première variable U₁ de la seconde paire est nulle (détermination négative au test de l'étape E58), le procédé se poursuit à l'étape E60 à laquelle le processeur 2 détermine si la première variable U₀ de la première paire est nulle.

Dans l'affirmative (flèche P), le processeur 2 met à la valeur 1 un indice i (étape E62). Dans la négative (flèche N), le processeur 2 met à la valeur 0 un indice i (étape E64). L'indice i désigne ainsi la paire dont la première variable Uᵢ est non-nulle (et vaut en l'occurrence 1 en valeur absolue).

Le processeur 2 détermine alors à l'étape E66 si le première variable Uᵢ de la paire désignée par l'indice i vaut -1, auquel cas le processeur 2 détermine la valeur p-Vᵢ (c'est-à-dire le résultat obtenu en soustrayant la seconde variable Vᵢ désignée par l'indice i au module p) et mémorise la valeur ainsi déterminée dans la seconde variable Vᵢ désignée par l'indice i (avec écrasement de la valeur précédente).

On a alors dans tous les cas : Vᵢ.a = 1 mod p.

Le processeur 2 peut ainsi déterminer à l'étape E70 la valeur de l'inverse modulaire recherché (a⁻¹) en appliquant à la seconde variable de la paire désignée par l'indice i l'opération de reste module p : a⁻¹ = Vᵢ mod p.

## Revendications

1. Procédé de détermination de l'inverse modulaire d'un nombre (a), dans lequel des itérations successives sont appliquées à deux paires comprenant chacune une première variable (U₀ ; U₁) et une seconde variable (V₀ ; V₁) de manière à ce qu'à la fin de chaque itération et pour chaque paire, le produit de la seconde variable (V₀ ; V₁) et dudit nombre (a) soit égal à la première variable (U₀ ; U₁) modulo un module donné (p), les deux paires comprenant une première paire et une seconde paire,
chaque itération incluant au moins une division par deux (E8 ; E18) de la première variable (U₀ ; U₁) de la première paire ou de la seconde paire, ou une combinaison (E46 ; E50) de la première variable (U₀) de la première paire et de la première variable (U₁) de la seconde paire par addition ou soustraction,
**caractérisé en ce que** certaines au moins des itérations incluant une combinaison par addition ou soustraction comprennent une étape de mémorisation (E46 ; E50) du résultat de ladite combinaison dans la première variable (Uᵣ) d'une paire déterminée de manière aléatoire parmi la première paire et la seconde paire.

2. Procédé selon la revendication 1, dans lequel, lorsque le nombre d'itérations effectuées est supérieur à un seuil (B), chaque itération incluant une combinaison par addition ou soustraction comprend une étape de mémorisation (E46 ; E50) du résultat de ladite combinaison dans la variable de plus grande valeur absolue parmi la première variable (U₀) de la première paire et la première variable (U₁) de la seconde paire.

3. Procédé selon la revendication 2, comprenant une étape préalable de détermination du seuil (B) par tirage aléatoire.

4. Procédé selon l'une des revendications 1 à 3, dans lequel, pour au moins une itération comprenant une combinaison par addition ou soustraction, la combinaison est réalisée par addition (E46) si la première variable de la première paire et la première variable de la seconde paire sont de signes opposés, et par soustraction (E50) si la première variable de la première paire et la première variable de la seconde paire sont de même signe.

5. Procédé selon l'une des revendications 1 à 4, dans lequel chaque itération comprenant une division par deux de la première variable d'une paire donnée comprend, si la seconde variable de ladite paire donnée est paire, une étape de division par deux de la seconde variable de ladite paire donnée (E12 ; E22), et, si la seconde variable de ladite paire donnée est impaire, une étape de somme de la seconde variable de ladite paire donnée et du module (p), et une étape de division par deux de ladite somme (E14 ; E24).

6. Procédé selon l'une des revendications 1 à 5, comprenant une étape de mémorisation d'une valeur aléatoire dans une variable supplémentaire (A), dans lequel, dans au moins une itération, on procède, si la variable supplémentaire (A) est paire, à la division par deux (E30) de la variable supplémentaire (A), et, si la variable supplémentaire est impaire, à la somme de la variable supplémentaire (A) et du module (p) et à la division par deux de cette somme (E32).

7. Procédé selon l'une des revendications 1 à 6, dans lequel chaque itération incluant une combinaison par addition ou soustraction comprend une combinaison similaire (E48 ; E52) de la seconde variable (V₀) de la première paire et de la seconde variable (V₁) de la seconde paire.

8. Dispositif de traitement cryptographique, comprenant une unité de détermination de l'inverse modulaire d'un nombre (a) conçue pour appliquer des itérations successives à deux paires comprenant chacune une première variable (U₀ ; U₁) et une seconde variable (V₀ ; V₁) de manière à ce qu'à la fin de chaque itération et pour chaque paire, le produit de la seconde variable (V₀ ; V₁) et dudit nombre (a) soit égal à la première variable (U₀ ; U₁) modulo un module donné (p), les deux paires comprenant une première paire et une seconde paire,
dans lequel ladite unité est conçue pour activer, à chaque itération, au moins un bloc de division par deux de la première variable (U₀ ; U₁) de la première paire ou de la seconde paire, ou un bloc de combinaison de la première variable (U₀) de la première paire et de la première variable (U₁) de la seconde paire par addition ou soustraction,
**caractérisé en ce que** ladite unité est conçue, pour certaines au moins des itérations, pour mémoriser le résultat produit par le bloc de combinaison dans la première variable (Uᵣ) d'une paire déterminée de manière aléatoire parmi la première paire et la seconde paire.

9. Dispositif de traitement cryptographique selon la revendication 8, dans lequel l'unité de détermination de l'inverse modulaire est conçue pour, lorsque le nombre d'itérations effectuées est supérieur à un seuil (B), mémoriser le résultat produit par le bloc de combinaison dans la variable de plus grande valeur absolue parmi la première variable de la première paire et la première variable de la seconde paire.

10. Dispositif de traitement cryptographique selon la revendication 8 ou 9, dans lequel le bloc de combinaison de la première variable (U₀) de la première paire et de la première variable (U₁) de la seconde paire par addition ou soustraction est conçu pour réaliser la combinaison par addition si la première variable (U₀) de la première paire et la première variable (U₁) de la seconde paire sont de signes opposés, et par soustraction si la première variable (U₀) de la première paire et la première variable (U₁) de la seconde paire sont de même signe.
